# EUROPÄISCHE PATENTANMELDUNG

(11) **EP 2 626 982 A1**
(43) Veröffentlichungstag der Anmeldung: **14.08.2013**
(21) Anmeldenummer: 12154189.0
(22) Anmeldetag: 07.02.2012
(51) Int. Cl.: H02K 7/116, H02K 5/00, H02K 9/19

(54) **Getriebemotor**

(71) Anmelder: Siemens Aktiengesellschaft, 80333 München (DE); Westfälische Hochschule Gelsenkirchen, Bocholt, Recklinghausen, 45877 Gelsenkirchen (DE)
(72) Erfinder: Meis, Jean-Andre, 48249 Duelmen (DE); Schoo, Alfred, 46397 Bocholt (DE)
(74) Vertreter: Maier, Daniel Oliver

(57) **Zusammenfassung**

Die Erfindung betrifft einen Getriebemotor (10). Der Getriebemotor (10) weist einen als Innenläufer ausgeführten elektrischen Motor mit einem Stator (St) und einem Rotor (Ro) und ein Planetengetriebe auf. Das Planetengetriebe umfasst ein erstes, fest mit dem Stator (St) verbundenes Hohlrad (1), ein zweites, fest mit einer Abtriebswelle (3) verbundenes Hohlrad (2), sowie mindestens ein Planetenräderpaar (p1, p2) mit einem ersten Planetenrad (p1) und einem zweiten Planetenrad (p2). Die Planetenräder (p1, p2) eines Planetenräderpaares sind fest miteinander verbunden und auf einem Steg (s) drehbar gelagert. Dabei wälzt das erste Planetenrad (p1) auf dem ersten Hohlrad (1) und das zweite Planetenrad (p2) auf dem zweiten Hohlrad (2) ab. Der Steg (s) ist durch den Rotor (Ro) antreibbar.

## Beschreibung

Die vorliegende Erfindung betrifft einen Getriebemotor.

Industrieantriebe beruhen heute zum größten Teil auf vollständig aufgelösten oder modularen mechatronischen Konzepten. Das klassische Beispiel für einen aufgelösten Antriebsstrang ist die Kombination aus Frequenzumrichter, Motor, Antriebskupplung, Getriebe und Abtriebskupplung. Jede Komponente wird von einem eigenen Hersteller produziert und dann erst zu einem System zusammengefügt. Bei den modularen mechatronischen Antriebssystemen hat heute der Getriebemotor eine Vormachtstellung. Hier entfällt in der Regel die antriebsseitige Kupplung; der Motor ist direkt an das Getriebegehäuse angeflanscht.

Insbesondere im Sondermaschinenbau oder bei mobilen Arbeitsmaschinen sind Antriebskonzepte notwendig, welche auf kleinstem Bauraum die nötige Leistung bereitstellen. Diese Antriebe müssen einfach in die Maschinenkonzepte implementierbar sein und sollten gleichzeitig ein hohes Maß an Zuverlässigkeit bieten. Zudem ist eine schnelle und einfache Wartung anzustreben. Aufgelöste oder modulare Antriebssysteme sind hier nicht optimal.

Aufgabe der vorliegenden Erfindung ist ein integriertes mechatronisches Antriebssystem.

Diese Aufgabe wird gelöst durch einen Getriebemotor mit den in Anspruch 1 angegebenen Merkmalen gelöst.

Der Getriebemotor umfasst einen als Innenläufer ausgeführten elektrischen Motor mit einem Stator und einem Rotor. Der Getriebemotor umfasst außerdem ein Planetengetriebe mit einem ersten, fest mit dem Stator verbundenen Hohlrad, einem zweiten, fest mit einer Abtriebswelle verbundenen Hohlrad, sowie mindestens einem Planetenräderpaar. Ein Planetenräderpaar umfasst ein erstes Planetenrad und ein zweites Planetenrad, wobei das erste Planetenrad und das zweite Planetenrad fest miteinander verbunden und auf einem Steg drehbar gelagert sind. Das erste Planetenrad wälzt auf dem ersten Hohlrad und das zweite Planetenrad auf dem zweiten Hohlrad ab. Dabei kann der Steg durch den Rotor angetrieben werden, d.h. eine Rotation des Rotors wird zur Rotation des Stegs genutzt.

Bei dem Planetengetriebe handelt es sich um ein Koppelgetriebe, bei dem die Kopplung der Getriebestufen über einen gemeinsamen Steg erfolgt. Die Begriffe "Steg" und "Planetenträger" werden hier gleichbedeutend benutzt. Der Abtrieb erfolgt über eines der beiden Hohlräder, während das andere Hohlrad fest mit dem Gehäuse verbunden ist und relativ zum Gehäuse still steht. Bei dieser Bauform eines Planetengetriebes handelt es sich um ein Plusgetriebe; es lassen sich mit dieser Getriebeform sehr große Übersetzungen ins Langsame erzielen, vorzugsweise bis in einen Bereich von ca. 1:20. Die vorliegende Erfindung bietet durch Übersetzungen bis in einen Bereich von ca. 1:20 in einer Stufe und auf relativ geringem Bauraum erhebliche Vorteile.

Aufgrund der Ausführung der Getriebestufen als gekoppelte Planetenradstufen mit positiver Standübersetzung ist in einer Stufe eine sehr hohe Übersetzung ins Langsame erzielbar, welche nur durch den sinkenden Wirkungsgrad und für bestimmte Anwendungen unerwünschte Selbsthemmung begrenzt wird. Das Antriebssystem eignet sich daher auch für extrem langsam laufende Anwendungen, z.B. Nabenantriebe, Walzenantriebe, Lüfter, kleine Windkraftanlagen. Das vorliegende Antriebssystem kann auch als Alternative zu herkömmlichen Getriebemotoren und deren Anwendungen verwendet werden. Zudem kann es in vielen Fällen hydraulische Antriebe ersetzen, z.B. in der Landmaschinentechnik.

Die Erfindung stellt ein integriertes mechatronisches Antriebssystem bereit, durch eine Integration eines Umlaufgetriebes, nämlich des Planetengetriebes, in einen Elektromotor. Durch die vollständige Integration von Elektrik, Mechanik und Steuerung/Regelung lässt sich im Bezug auf Bauraum und Gewicht, und dadurch auch Leistungsdichte, ein Antriebssystem bereitstellen, welches gegenüber bekannten Antrieben deutlich verbessert ist.

Die Erfindung erfüllt somit den in der Antriebstechnik vorhandenen Wunsch nach kompakten und leichten Antriebssystemen, welche zudem möglichst wenig Bauraum beanspruchen. Der vorgeschlagene Getriebemotor erreicht dies durch die gezielte Integration von Komponenten. Dadurch werden vorhandene Freiräume genutzt und somit Bauraum eingespart.

Der Erfindung liegt dabei die Erkenntnis zugrunde, dass die Integration von Komponenten ein meist deutlich höheres Potential zur Erhöhung der Leistungsdichte eines Antriebssystems hat als die Verbesserung einzelner Komponenten, weil in der Vergangenheit verstärkt an der Optimierung der Komponenten gearbeitet und hierdurch mittlerweile eine gewisse Sättigung erreicht wurde.

Die Anordnung der Umlaufgetriebestufe im elektrischen Motor ergibt eine einfache und kompakte Gesamtgeometrie, welche die Montage durch direktes Anflanschen auch in schwierig zugänglichen Bereichen erlaubt. Das integrierte Antriebssystem ist so vor allem für den direkten Antrieb z. B. von Walzen oder als Nabenantrieb bei mobilen Arbeitsmaschinen nutzbar.

Vorteilhafte Ausgestaltungen und Weiterbildungen der Erfindung ergeben sich aus den abhängigen Ansprüchen.

Es ist vorteilhaft, wenn das Planetengetriebe nicht nur ein einziges Planetenräderpaar, sondern mehrere Planetenräderpaare aufweist, welche jeweils ein erstes und ein zweites Planetenrad umfassen, wobei das erste Planetenrad und das zweite Planetenrad fest miteinander verbunden und auf dem Steg drehbar gelagert sind und wobei das erste Planetenrad auf dem ersten Hohlrad und das zweite Planetenrad auf dem zweiten Hohlrad abwälzt. Vorzugsweise umfasst das Planetengetriebe zwei, drei, vier oder sogar noch mehr Planetenräderpaare. Je mehr Planetenräderpaare in dem Planetengetriebe zum Einsatz kommen, desto besser kann die Leistung geteilt werden, d.h. die mechanische Belastung jedes Planetenräderpaares nimmt mit der Anzahl der eingesetzten Paare ab.

Gemäß einer bevorzugten Ausgestaltung der Erfindung ist bzw. sind das erste Hohlrad und/oder das zweite Hohlrad radial innerhalb des Rotors angeordnet. Durch eine vollständige Integration mindestens einer Getriebestufe in den inneren Hohlraum des Motors kann eine deutliche Steigerung der Quotienten Drehmoment zu Volumen und Drehmoment zu Masse erzielt werden.

Gemäß einer bevorzugten Weiterbildung der Erfindung weist der Getriebemotor ein Gehäuse auf, das teilweise durch den Stator gebildet ist. Durch die Nutzung des Stators als Teil des Getriebegehäuses wird Material eingespart und die die Anzahl der Komponenten reduziert. Dasselbe gilt für die gleichzeitige Nutzung des Rotors als antriebsseitige Kupplung und Planetenträger.

Es ist vorteilhaft, wenn das Gehäuse zumindest abschnittsweise eine Zylinderform aufweist. Durch die zylinderförmige Au-βenkontur des Antriebs eignet sich dieser vor allem für Einsatzgebiete, die eine hohe Anforderung an die Sauberkeit stellen. Die Zylinderform ist einfach zu reinigen, da keine schwer zugänglichen oder Verunreinigungen haltenden Formelemente vorhanden sind.

Gemäß einer bevorzugten Ausgestaltung der Erfindung ist das Gehäuse, abgesehen von einer Öffnung zum Auskoppeln der Rotation der Abtriebswelle, schmierstoffdicht geschlossen. Das Antriebssystem hat in diesem Fall nur eine einzige Schnittstelle nach Außen, durch welche Schmierstoffe austreten könnten. Daher ist diese Ausgestaltung der Erfindung für Anwendungen, welche nicht durch Schmierstoffe kontaminiert werden dürfen, besser geeignet als normale aufgelöste Antriebsstränge, welche eine höhere Anzahl an abzudichtenden Stellen besitzen. Umgekehrt ist bei einem Betrieb des vorgeschlagenen Getriebemotors unter korrosiver Umgebung nur eine Dichtstelle für den möglichen Eintritt korrosiver Stoffe vorhanden.

Gemäß einer bevorzugten Weiterbildung der Erfindung ragt die Abtriebswelle durch die Öffnung aus dem Gehäuse, wobei ein Ringspalt zwischen der Abtriebswelle und dem Gehäuse durch eine Dichtung gegen ein Austreten von Schmierstoff abgedichtet ist.

Gemäß einer bevorzugten Weiterbildung der Erfindung ist das Gehäuse durch den Stator und zwei Deckel gebildet, die jeweils an einer der beiden Stirnseiten des Stators angeordnet sind, wobei einer der Deckel eine Öffnung zum Auskoppeln der Rotation der Abtriebswelle nach außen aufweist.

Es ist von Vorteil, wenn der Steg, der als Planetenträger dient, durch einen den Rotor tragenden Rotorgrundkörper gebildet ist. Hierbei ist anzustreben, dass der Rotorgrundkörper und der Steg zu einem Bauteil verschmelzen.

Es ist bevorzugt, dass die beiden Hohlräder jeweils an den Stirnseiten des Rotorgrundkörpers angeordnet sind.

Gemäß einer bevorzugten Weiterbildung der Erfindung weisen der Stator und der Rotor eine Ringform auf, wobei der Rotor radial innerhalb des Stators drehbar gelagert ist. In einer besonders bevorzugten Ausgestaltung der Erfindung ist der Getriebemotor als ein Torquemotor mit Planetenstufen ausgebildet.

Durch die Ausführung des elektrischen Motors in ringförmiger Bauweise kann eine vollständige Integration von Elektrik und Mechanik erreicht werden. Innerhalb des Rotors des elektrischen Antriebs ist das Planetengetriebe so anzuordnen, dass der Rotor den Steg des Planetengetriebes antreiben kann. Gemäß einer bevorzugten Weiterbildung der Erfindung dient eine Wasserkühlung des Motors gleichzeitig einer Kühlung des Getriebes oder eine Schmierstoffkühlung des Getriebes gleichzeitig einer Kühlung des Motors.

Bei der Kühlung ergeben sich verschiedene Optionen. Zum einen kann die Wasserkühlung des Motors zur gleichzeitigen Kühlung des Getriebes verwendet werden. Dadurch ist sichergestellt, dass das Getriebe im Inneren des Motors nicht überhitzt. Zum anderen kann durch eine entsprechende Wahl des Schmierstoffs, insbesondere eines Öls, vorzugsweise eines Getriebeöls, und bei günstigen Betriebs- und Umgebungsbedingungen auf die Wasserkühlung verzichtet werden. Das Getriebeöl übernimmt dann die Kühlung sowohl von Getriebe als auch Motor.

Es ist möglich, dass der Stator durch einen Rahmen, insbesondere einen Flansch, gebildet ist, an welchem der Getriebemotor montierbar ist. Diese Anordnung spiegelt einen wichtigen Vorteil des beschriebenen Getriebemotors: durch seine Anordnung am äußeren Umfang des Getriebemotors kann der Stator in vielfältiger Weise weitere Funktionen übernehmen. Insbesondere kann er zumindest Teil eines Rahmens sein, z.B. eines Flansches, an welchem der Getriebemotor befestigt werden kann.

Die oben beschriebenen Eigenschaften, Merkmale und Vorteile dieser Erfindung sowie die Art und Weise, wie diese erreicht werden, werden klarer und deutlicher verständlich durch die folgende Beschreibung der Ausführungsbeispiele, welche anhand der Zeichnungen näher erläutert werden. Es zeigt
- Fig. 1: ein Schema eines ersten Ausführungsbeispiels eines Getriebemotors;
- Fig. 2: ein Schema eines weiteren Ausführungsbeispiels eines Getriebemotors;
- Fig. 3: einen Schnitt durch eine Hälfte eines weiteren Ausführungsbeispiels eines Getriebemotors; und
- Fig. 4: eine Ansicht eines weiteren Ausführungsbeispiels eines Getriebemotors.

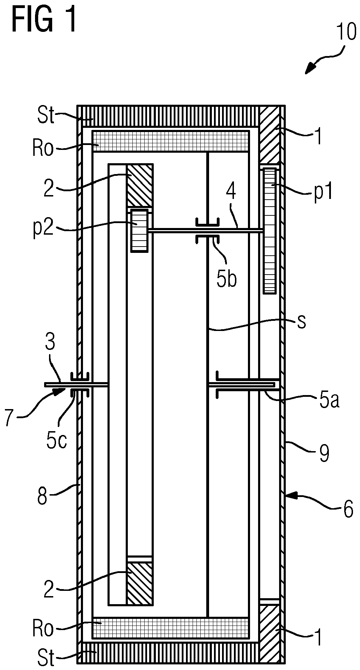

Fig. 1 zeigt einen Getriebemotor 10, bei dem ein Planetenträger s eines zweistufigen Koppelgetriebes 1, 2, p1, p2 direkt in einen Rotor Ro eines Innenläufer-Motors St, Ro integriert ist. In einem den Rotor Ro tragenden Rotorgrundkörper s, der in einem Lager 5a gelagert ist, ist eine gemeinsame Planetenwelle 4 für beide Koppelstufen 1, p1 bzw. 2, p2 gelagert 5b, deren Planetenräder p1, p2 an jeweils unterschiedlichen Stirnseiten des Rotorgrundkörpers s angeordnet sind. An beiden Stirnseiten des Rotorgrundkörpers s ist jeweils ein Hohlrad 1, 2 mit Innenverzahnung angeordnet, das mit außenverzahnten Planetenrädern p1, p2 einer zugeordneten Koppelstufe kämmt. Auf diese Weise werden zwei Getriebestufen ausgebildet. Dabei ist ein erstes Hohlrad 1 fest mit einem Gehäuse 6 des Getriebemotors 10 verbunden, während ein zweites Hohlrad 2 mit einer im Gehäuse 6 gelagerten 5c Abtriebswelle 3 verbunden ist.

Das Gehäuse 6 ist aus dem ringförmigen Stator St sowie zwei Deckeln 8, 9 gebildet, die jeweils auf einer der beiden Stirnseiten des Stators St angeordnet sind. Das Gehäuse weist lediglich eine in der Mitte des vorderen Deckels 8 angeordnete Öffnung 7 auf, durch welche die mit dem zweiten Hohlrad drehfest verbundene Abtriebswelle 3 nach außen ragt.

Der Ringspalt zwischen der Abtriebswelle 3 und dem vorderen Deckel 8 ist durch eine Dichtung schmierstoffdicht abgedichtet.

Der Getriebemotor 10 realisiert einen Antriebsstrang mit hoher Leistungsdichte, der sowohl mechanische als auch elektrische Komponenten integriert. Gleichzeitig wird eine Materialeinsparung erzielt, da der den Rotor Ro tragende Grundkörper auch den Planetenträger s bildet.

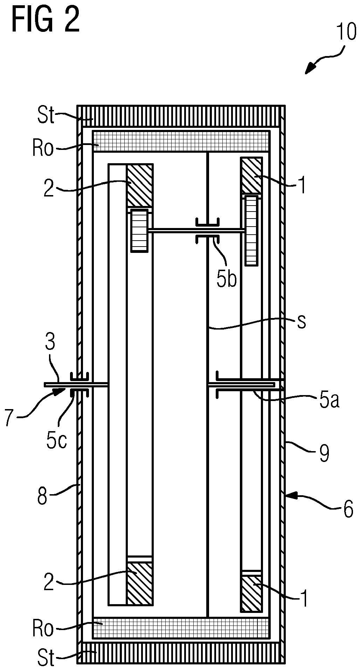

Fig. 2 zeigt einen Getriebemotor 10, der im Wesentlichen dem in Fig. 1 dargestellten Getriebemotor gleicht, bis auf den folgenden Unterschied: bei dem in Fig. 2 gezeigten Getriebemotor 10 sind sowohl das erste Hohlrad 1 als auch das zweite Hohlrad 2 radial innerhalb des Rotors Ro angeordnet, wohingegen bei dem in Fig. 1 gezeigten Getriebemotor 10 nur das zweite Hohlrad 2 radial innerhalb des Rotors Ro angeordnet ist.

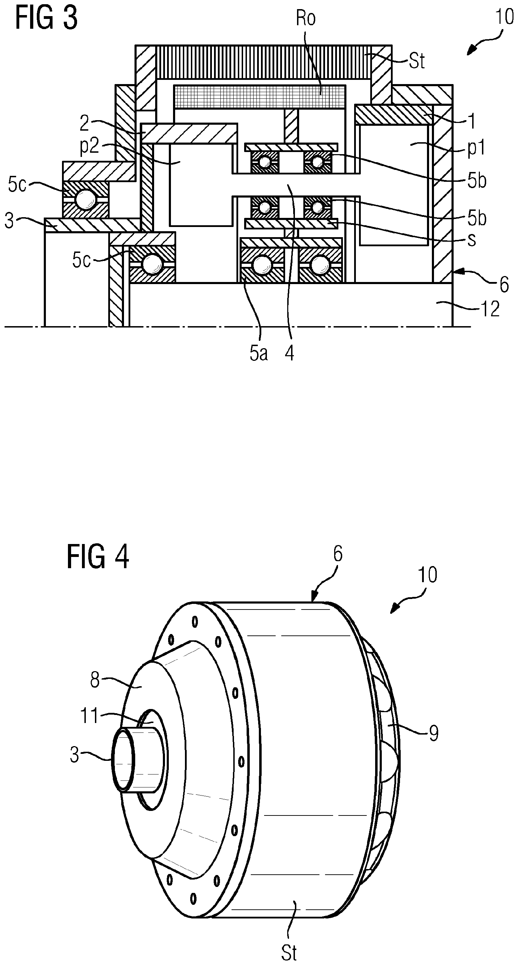

Fig. 3 zeigt einen Schnitt durch eine Hälfte eines weiteren Ausführungsbeispiels des Getriebemotors 10. Der Getriebemotor 10 umfasst einen Innenläufer-Motor mit einem ringförmigen Stator St und einem ringförmigen Rotor Ro, der radial innerhalb des Stators St angeordnet ist. Der Rotor Ro ist auf einem Steg s angeordnet, welcher mittels Wälzlager 5a drehbar auf einer Rotorwelle 12 gelagert ist. Der Stator St formt eine Seitenwand eines zylinderförmigen Gehäuses 6, welches die Schutzhülle des Getriebemotors 10 bildet.

In dem Steg s ist mittels Wälzlager 5b eine Planetenwelle 4 gelagert, die an beiden Enden jeweils ein Planetenrad p1, p2 trägt. Ein erstes Planetenrad p1 kämmt mit einem ersten Hohlrad 1, das fest mit dem Gehäuse 6, und damit dem Stator St, verbunden ist. Ein zweites Planetenrad p2 kämmt mit einem zweiten Hohlrad 2, das relativ zu dem Gehäuse 6 drehbar ist. Dabei sitzt das zweite Hohlrad 2 auf einer Abtriebswelle 3, die mittels Wälzlager 5c drehbar in dem Gehäuse 6 gelagert ist.

Die in Fig. 3 als Kugellager gezeichneten Wälzlager 5a, 5b und 5c werden vorzugsweise als Rollenlager, insbesondere als Zylinderrollenlager, ausgebildet.

Fig. 4 zeigt eine Ansicht eines weiteren Ausführungsbeispiels eines Getriebemotors 10. Das Gehäuse 6 des Getriebemotors 10 wird durch den zylindrischen Stator St und zwei Deckel 8 und 9 gebildet, die jeweils an einer der beiden Stirnseiten des Stators St befestigt sind, z.B. durch Schrauben. Der vordere Deckel 8 weist eine Öffnung zum Auskoppeln der Rotation einer Abtriebswelle 3 nach außen auf. Die Abtriebswelle 3 ragt durch die Öffnung aus dem Gehäuse 6 heraus, wobei ein Ringspalt zwischen der Abtriebswelle 3 und dem Gehäuse 6 durch eine Dichtung 11 gegen ein Austreten von Schmierstoff abgedichtet ist.

Obwohl die Erfindung im Detail durch die bevorzugten Ausführungsbeispiele näher illustriert und beschrieben wurde, so ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Getriebemotor (10), umfassend
- einen als Innenläufer ausgeführten elektrischen Motor mit einem Stator (St) und einem Rotor (Ro) und
- ein Planetengetriebe mit einem ersten, fest mit dem Stator (St) verbundenen Hohlrad (1), einem zweiten, fest mit einer Abtriebswelle (3) verbundenen Hohlrad (2), sowie mindestens einem Planetenräderpaar (p1, p2) mit einem ersten Planetenrad (p1) und einem zweiten Planetenrad (p2), wobei das erste Planetenrad (p1) und das zweite Planetenrad (p2) fest miteinander verbunden und auf einem Steg (s) drehbar gelagert sind und wobei das erste Planetenrad (p1) auf dem ersten Hohlrad (1) und das zweite Planetenrad (p2) auf dem zweiten Hohlrad (2) abwälzt,
wobei der Steg (s) durch den Rotor (Ro) antreibbar ist.

2. Getriebemotor (10) nach Anspruch 1,
wobei das erste Hohlrad (1) und/oder das zweite Hohlrad (2) radial innerhalb des Rotors (Ro) angeordnet sind.

3. Getriebemotor (10) nach Anspruch 2,
wobei der Getriebemotor (10) ein Gehäuse (6) aufweist, das teilweise durch den Stator (St) gebildet ist.

4. Getriebemotor (10) nach Anspruch 3,
wobei das Gehäuse (6) zumindest abschnittsweise eine Zylinderform aufweist.

5. Getriebemotor (10) nach Anspruch 3 oder 4,
wobei das Gehäuse (6), abgesehen von einer Öffnung (7) zum Auskoppeln der Rotation der Abtriebswelle (3), schmierstoffdicht geschlossen ist.

6. Getriebemotor (10) nach Anspruch 5,
wobei die Abtriebswelle (3) durch die Öffnung (7) aus dem Gehäuse (6) ragt, wobei ein Ringspalt zwischen der Abtriebswelle (3) und dem Gehäuse (6) durch eine Dichtung (11) gegen ein Austreten von Schmierstoff abgedichtet ist.

7. Getriebemotor (10) nach einem der Ansprüche 3 bis 6,
wobei das Gehäuse (6) durch den Stator (St) und zwei Deckel (8, 9) gebildet ist, die jeweils an einer der beiden Stirnseiten des Stators (St) angeordnet sind, wobei einer der Deckel (8) eine Öffnung (7) zum Auskoppeln der Rotation der Abtriebswelle (3) nach außen aufweist.

8. Getriebemotor (10) nach einem der vorhergehenden Ansprüche,
wobei der Steg (s) durch einen den Rotor (Ro) tragenden Rotorgrundkörper gebildet ist.

9. Getriebemotor (10) nach Anspruch 8,
wobei die beiden Hohlräder (1, 2) jeweils an den Stirnseiten des Rotorgrundkörpers angeordnet sind.

10. Getriebemotor (10) nach einem der vorhergehenden Ansprüche,
wobei der Stator (St) und der Rotor (Ro) eine Ringform aufweisen und der Rotor (Ro) radial innerhalb des Stators (St) drehbar gelagert ist.

11. Getriebemotor (10) nach einem der vorhergehenden Ansprüche,
wobei eine Wasserkühlung des Motors gleichzeitig einer Kühlung des Getriebes dient oder eine Schmierstoffkühlung des Getriebes gleichzeitig einer Kühlung des Motors dient.

12. Getriebemotor (10) nach einem der vorhergehenden Ansprüche,
wobei das Planetengetriebe mehrere, vorzugsweise zwei, drei oder vier, Planetenräderpaare (p1, p2) aufweist, welche jeweils ein erstes (p1) und ein zweites Planetenrad (p2) umfassen, wobei das erste Planetenrad (p1) und das zweite Planetenrad (p2) fest miteinander verbunden und auf dem Steg (s) drehbar gelagert sind und wobei das erste Planetenrad (p1) auf dem ersten Hohlrad (1) und das zweite Planetenrad (p2) auf dem zweiten Hohlrad (2) abwälzt.

13. Getriebemotor (10) nach einem der vorhergehenden Ansprüche,
wobei der Stator (St) durch einen Rahmen, insbesondere einen Flansch, gebildet ist, an welchem der Getriebemotor (10) montierbar ist.
